# EUROPEAN PATENT APPLICATION

(11) **EP 1 387 593 A2**
(43) Date of publication of application: **04.02.2004**
(21) Application number: 03017266.2
(22) Date of filing: 30.07.2003
(51) Int. Cl.: H04Q 7/32, G06F 17/60

(54) **Information processing terminal and information processing method**

(30) Priority: 31.07.2002 JP 2002222787
(71) Applicant: MATSUSHITA ELECTRIC INDUSTRIAL CO., LTD., Kadoma-shi, Osaka-fu (JP)
(72) Inventor: Inami, Satoshi, Nishinomiya-shi, Hyogo-ken 662-0841 (JP); Weber, Daniel, Moriguchi-shi, Osaka-fu 570-0031 (JP); Fukushima, Hideaki, Kashiba-shi, Nara-ken 639-0265 (JP)
(74) Representative: Gassner, Wolfgang

(57) **Abstract**

Based on a result of determination made by a conflict determination section (13), a resource access section (11) determines whether an application is allowed to access a resource section (16) or not. If access is allowed, a function for realizing access to the resource section (16), which is already registered in the resource access section (11), is called. Thus, it is possible to create applications without paying attention to prevention of resource conflicts. Moreover, the resource section (16) can be reused easily. Furthermore, the entire system can undergo a well-balanced operation.

## Description

### BACKGROUND OF THE INVENTION

### Field of the Invention

The present invention relates to an information processing terminal and an information processing method, and more particularly to an information processing terminal and an information processing method for controlling access from a plurality of software applications (hereinafter simply referred to as "applications") to the same resource'.

### Description of the Background Art

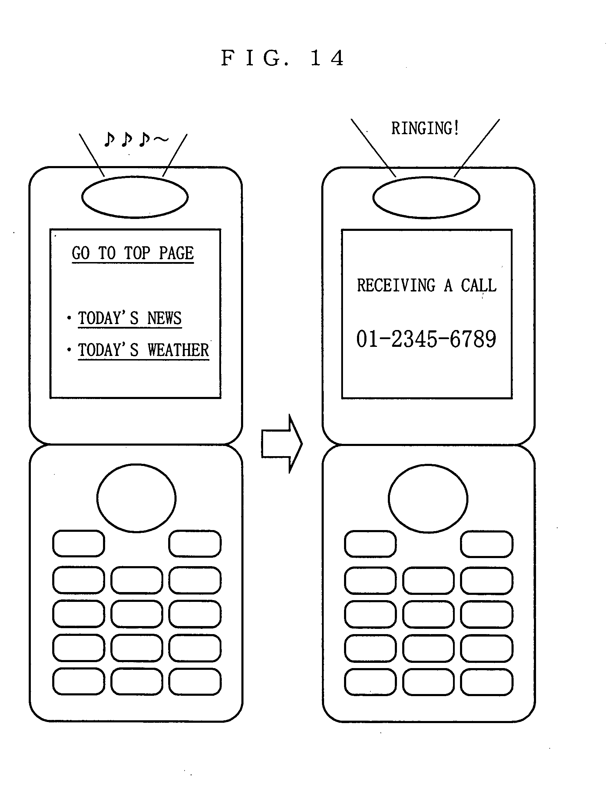

In a conventional information processing terminal (e.g., a mobile phone), it is a frequent practice to allow a particular application (e.g., a telephone function) a higher priority over another application (e.g., a web browser) in accessing a given resource (e.g., a loudspeaker). For example, in the case of a mobile phone, the ability to answer telephone calls is usually more important to the user than the ability to browse web pages. Therefore, if a telephone call is received while the user is viewing a media content using a web browser, it is common practice to interrupt the displaying process of the web page or the audio outputting process of the background music or the like, and instead display an "incoming call" screen for notifying the telephone call and output a call sound (see FIG. 14).

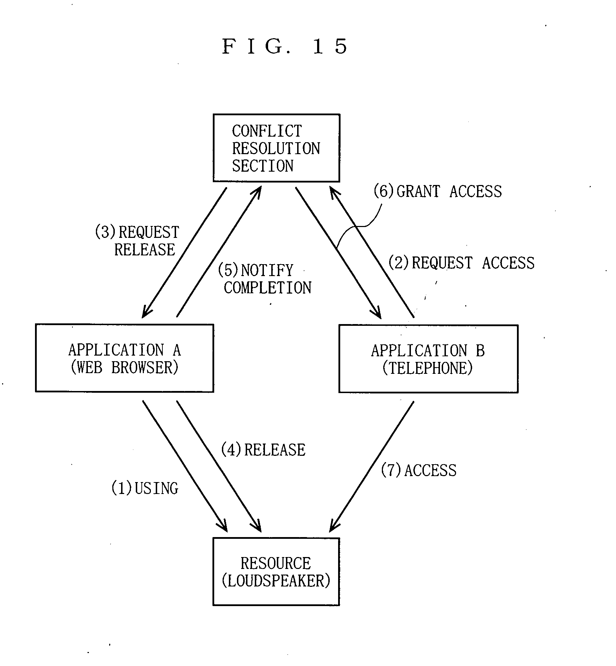

Conventionally, the above processing is realized by a software component (a "conflict resolution section") which controls what sort of priority in accessing each given resource is to be given to which application, such control being made with respect to every application present within the information processing terminal (see FIG. 15). The conflict resolution section operates in the following manner. When a request to access a resource which is currently used by a given application (application A) is received by another application (application B) (2), the conflict resolution section requests application A to release the resource if application B is given a higher priority than application A (3). Upon receiving this request, application A performs a process for interrupting the use of the resource (4), and thereafter returns a notification to the conflict resolution section that the resource has been released (5). Upon receiving this notification, the conflict resolution section gives application B a permission to access the resource (6). Only based on this permission can application B access the resource (7).

Another method employs a specially designed function for accessing a resource, such that the special function contains codes which enable a telephone application to always gain access to a certain resource, regardless of what other application is using the resource. Thus, this method realizes an "ad-hoc" priority management.

In yet another method, the application itself is designed so that any application is required to release the resource in use at the time of switching between applications.

Still another method for preventing conflict between applications based on queueing is disclosed in Japanese Patent No. 2828971. According to this method, a user can freely swap the order of jobs which are in the queue. Therefore, by registering the request from a given application at the top of the queue, it becomes possible to give that application the highest priority in accessing a resource.

However, the aforementioned conventional methods have the following problems.

According to the method employing a conflict resolution section as illustrated in FIG. 15, the programmers of the applications need to understand the operating mechanism of the conflict resolution section as a software component for resolving resource conflicts, and program the application based on the mechanism. In other words, the application must be programmed so as to be complete with: a series of processes from monitoring the presence/absence of a request at (3) (FIG. 15), executing the process of (4) upon detection of a request, and giving a notification at (5); and a series of processes from making a request at (2), and beginning access at (7) only after receiving permission at (6). Thus, the programming of such an application is complicated. There is also a serious problem in that, if a non-abiding application (i.e., an application which does not behave in accordance with the conflict-resolving mechanism) is present within the information processing terminal, such a non-abiding application will keep occupying a resource even if access to the resource is requested from a higher-priority application. In other words, one such defective application may ruin the entire system.

According to the method which realizes an ad-hoc priority management by providing a special function which is designed for a telephone application as a function for realizing access to a resource, the use of such a non-generic function makes difficult reuse of software resource. In other words, specially-designed functions for realizing access to a resource and specialized resource programs are difficult to be reused for more generic purposes.

According to the method based on queueing, requests to access a resource will be processed according to the order in which the requests were made, unless the user explicitly swaps the order in the queue. This method does not enable automatic priority assignment for one application over another.

### SUMMARY OF THE INVENTION

Therefore, an object of the present invention is to provide an information processing terminal and an information processing method which realize prevention of resource conflicts without requiring application programmers to pay special attention to the problem.

Another object of the present invention is to provide an information processing terminal and an information processing method which realize prevention of resource conflicts even in the case where applications which are not programmed so as to abide by the resource conflict-resolving mechanism are present.

Still another object of the present invention is to provide an information processing terminal and an information processing method which realize prevention of resource conflicts without the need to provide a special function. This makes it possible to describe functions for realizing access to a resource section and the resource section program in generic manners, so that such functions and programs can be conveniently reused for other systems with ease.

The present invention has the following features to attain the object mentioned above. An information processing terminal according to the present invention comprises: an execution section containing a plurality of software pieces; a resource section including at least one resource to be accessed by at least one of the software pieces; a resource access section for mediating access by the software pieces in the execution section to the at least one resource by using a generic interface for accessing the resource section; a state of use determination section for determining whether the at least one resource is being currently used or hot; an exploiting-software priority management section for managing a priority level of an exploiting-software piece, wherein the exploiting-software piece is a software piece currently using the at least one resource; a requesting-software priority acquisition section for acquiring a priority level of a requesting-software piece, wherein the requesting-software piece is a software piece which is making a request to access the at least one resource; and a conflict determination section for comparing the priority level acquired from the exploiting-software priority management section and the priority level acquired from the requesting-software priority acquisition section, and determining which one of the exploiting-software piece and the requesting-software piece should be granted access to the at least one resource, wherein, based on the result of the determination by the state of use determination section and the result of the determination by the conflict determination section, the resource access section is operable to: (A) if the at least one resource is not being currently used, or if the priority level of the requesting-software piece is higher than the priority level of the exploiting-software piece, access the at least one resource in accordance with the request of the requesting-software piece, and notify an error to the exploiting-software piece, or (B) if the priority level of the requesting-software piece is lower than the priority level of the exploiting-software piece, notify an error to the requesting-software piece.

Thus, according to the present invention, access to the resource is controlled by the resource access section based on priority levels. As a result, in the creation of each individual software piece, it becomes unnecessary to pay attention to giving any higher priority to a specific software piece (e.g., a telephone function in the case of a mobile phone). Thus, the task of the programmer of the software pieces is facilitated, and the structure of the software piece can be simplified. Since this eliminates any such rule that a given function (e.g., a telephone function) deserves a higher priority over the others, it becomes easier for any third party to create software pieces, which might potentially encourage the general public to produce software in larger quantities. In the case where it is necessary to readjust the priority level of any given software piece, it only suffices to change a set of rules which are provided in the form of a table or the like, which leads to an enhanced reusability of the software pieces. Furthermore, a resource section program can be written by simply creating a function(s) which complies with the resource-conflict-preventing principle according to the present invention and register such a function(s) in the resource access section. Thus, the reusability of the resource section is also enhanced.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating the structure of an information processing terminal according to a first embodiment of the present invention;
FIG. 2 is a sequence chart illustrating a processing procedure of the information processing terminal according to the first embodiment of the present invention;
FIG. 3 shows an exemplary priority management table used for managing application-to-application priority in the information processing terminal according to the first embodiment of the present invention;
FIG. 4 shows another exemplary priority management table used for managing application-to-application priority in the information processing terminal according to the first embodiment of the present invention;
FIG. 5 is a block diagram illustrating the structure of an information processing terminal according to a second embodiment of the present invention;
FIG. 6 shows an exemplary table which is managed by an application-by-application device state management section in the information processing terminal according to the second embodiment of the present invention;
FIG. 7 is a sequence chart illustrating a processing procedure of the information processing terminal according to the second embodiment of the present invention;
FIG. 8 is a sequence chart illustrating a processing procedure of the information processing terminal according to a third embodiment of the present invention;
FIG. 9 is a block diagram illustrating the structure of an information processing terminal according to a fourth embodiment of the present invention;
FIG. 10 is a sequence chart illustrating a processing procedure of the information processing terminal according to the fourth embodiment of the present invention;
FIG. 11 shows an exemplary priority management table used for managing library-to-library priority in the information processing terminal according to the fifth embodiment of the present invention;
FIG. 12 is a block diagram illustrating the structure of an information processing terminal according to a sixth embodiment of the present invention;
FIG. 13 is a schematic diagram illustrating how the overlying relationship between displayed layers is switched according to the sixth embodiment of the present invention;
FIG. 14 is a schematic diagram illustrating how priority is given to a telephone function in a conventional mobile phone when a telephone call is received while displaying a web page; and
FIG. 15 is a block diagram illustrating the structure of a conventional device for preventing resource conflicts by means of a conflict resolution section.

### DESCRIPTION OF THE PREFERRED EMBODIMENTS

Hereinafter, various embodiments of the present invention will be specifically described with reference to the accompanying figures.

### (first embodiment)

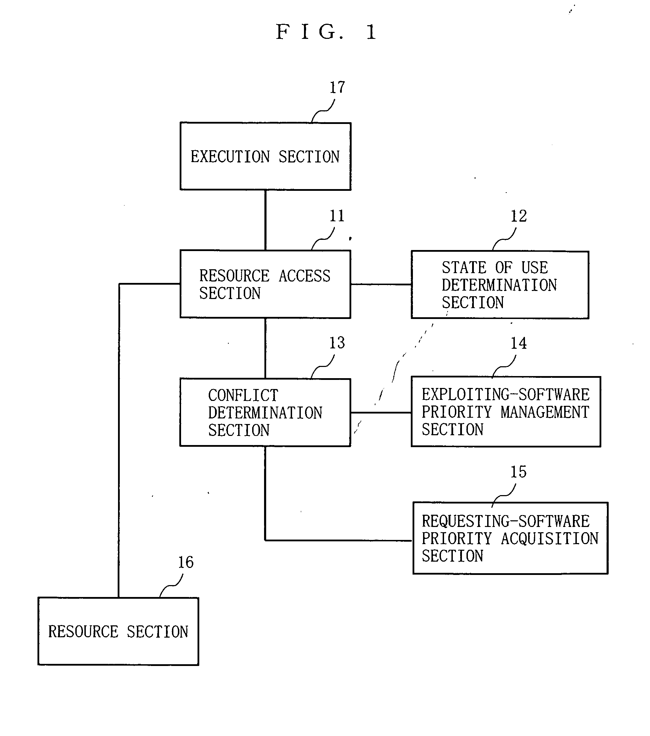

FIG. 1 is a block diagram illustrating the structure of an information processing terminal according to a first embodiment of the present invention. In FIG. 1, the information processing terminal comprises a resource access section 11, a state of use determination section 12, a conflict determination section 13 , a exploiting-software priority management section 14, a requesting-software priority acquisition section 15, a resource section 16, and an execution section 17.

The resource section 16 is a device, e.g., a loudspeaker or a liquid crystal display, used in a mobile terminal or the like. The execution section 17 is a program, which may more specifically be a software application, a library or other middleware which can be incorporated in software applications, or a driver.

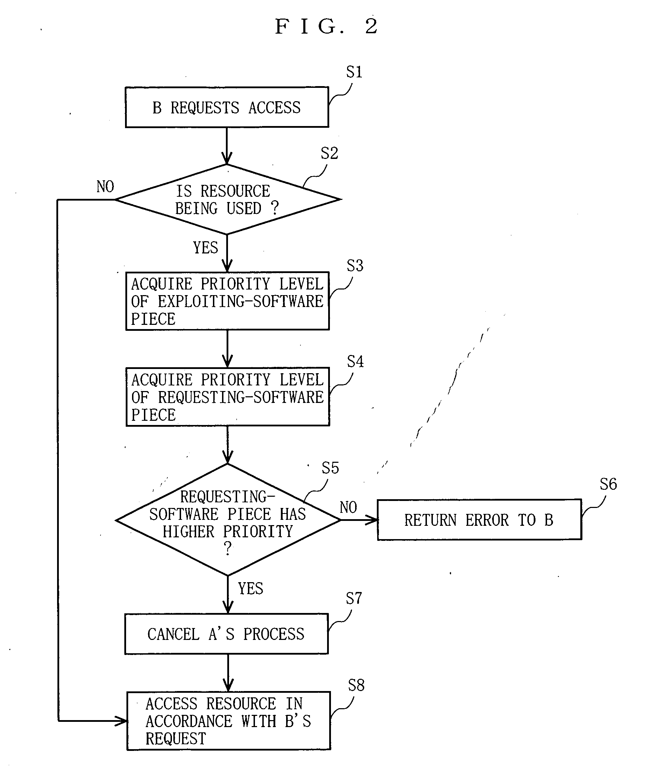

Next, the operation of the information processing terminal having the above structure will be described with reference to the sequence chart of FIG. 2. In the description of the sequence chart of FIG. 2, it is assumed that the execution section 17 is an application. It is also assumed that functions for realizing access to the resource section 16 are already registered in the resource access section 11. Since such registrations can be made via a generic interface which is provided by the resource access section 11, the designer of the resource section 16 only needs to follow the guidelines of the generic interface. Thus, it is easy for any third party to design and produce the resource section 16.

First, in response to a user's operation, application B, which has a higher level of priority than application A, makes an accessing request to the resource access section 11 in order to use the resource section 16 (step S1).

Then, the resource access section 11 parses the request from application B to ascertain the resource which application B desires to access, and inquires the state of use determination section 12 as to whether the resource is being used by any other application. The state of use determination section 12 determines whether there is any application which is accessing the designated resource, and returns the result of this determination to the resource access section 11 (step S2). If the result of this determination indicates that there is no other application which is currently using the resource (following the "NO" path from step S2), the resource access section 11 transmits the command which was requested by application B to the resource section 16 (step S8). At this time, a function which was previously registered in the resource access section 11 is used.

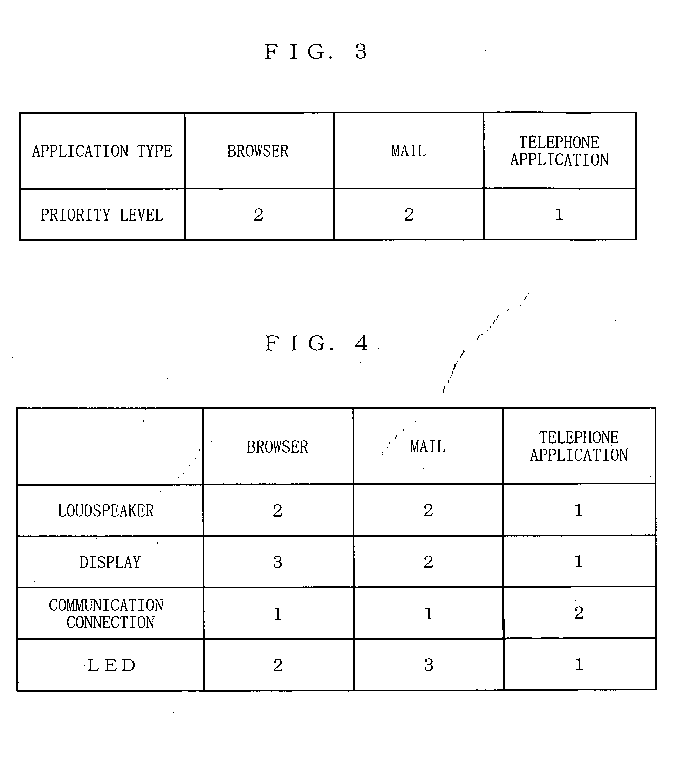

If step S2 finds that there is an application (e.g., application A) which is currently using the resource (following the "YES" path from step S2), the resource access section 11 passes information concerning application B to the conflict determination section 13 and asks the conflict determination section 13 to make a priority determination in order to avoid conflict. The conflict determination section 13 inquires the exploiting-software priority management section 14 about the priority level of application A which is currently using the resource, and obtains the priority level of application A with respect to the resource (step S3). Note that, each time an application uses a resource, the exploiting-software priority management section 14 acquires the priority level of such an application by referring to a priority management table as shown in FIG. 3, for example, and manages the acquired priority information.

Next, the conflict determination section 13 inquires the requesting-software priority acquisition section 15 to acquire therefrom the priority level of application B with respect to the resource (step S4). The requesting-software priority acquisition section 15 refers to the priority management table as shown in FIG. 3, for example, to acquire the priority level of application B therefrom. For the "application type" field in the priority management table, the names of applications may be used (as exemplified in FIG. 3), or application IDs which are uniquely assigned to the applications may alternatively be used. In the case where applications are divided into groups, application group IDs which are uniquely assigned to the application groups may be used, or IDs of the processes or threads executing the applications may be used. By managing priority based on such a table, it becomes easy to change the priority settings, and eliminates the need to alter each application when its priority level is to be changed in the future.

Then, the conflict determination section 13 compares the priority level of application A obtained from the exploiting-software priority management section 14 and the priority level of application B obtained from the requesting-software priority acquisition section 15, and returns the result of the comparison to the resource access section 11. (step S5).

Based on the result of the comparison by the conflict determination section 13, the resource access section 11 returns an access error to application B if application B has a lower priority level than that of application A, thereby denying access to the resource (step S6). On the other hand, if application B has a higher priority level than that of application A, the resource access section 11 calls a previously registered function, thereby requesting the resource section 16 to cancel the process performed by application A (step S7 ) . For example, if application A has been using a loudspeaker to output music, the resource access section 11 orders the loudspeaker to stop outputting the music. Thereafter, application B is allowed to access the resource as desired (step S8). At this time, the resource access section 11 notifies an error to application A indicating that application A has "surrendered" (i.e., lost access to) the resource due to a resource conflict. At this time, it would also be possible to notify with which application the resource conflict is occurring (i.e., application B in this example).

Thus, according to the present embodiment, if application B suddenly needs to generate a sound while application A is using the loudspeaker, application B will make a request for accessing the loudspeaker to the resource access section 11, and the resource access section 11 will automatically cancel the use of the loudspeaker by application A and grant the request of the application B (assuming that application B has a higher priority level than that of application A) . Therefore, applications A and B do not need to perform any special processes for resolving the conflict (e.g., steps (2) and (3) to (6) in FIG. 15). Instead, each of applications A and B only needs to make a request to access the resource to the resource access section 11. When it becomes necessary to change the priority levels of the applications, it suffices to alter the content of the table as shown in FIG. 3, rather than having to modify the individual applications or the resource section 16. As for the functions for executing various processes to the resource section 16, it is only necessary to create functions for canceling processes or functions for executing processes, and register such functions in the resource access section 11. Therefore, there is no need to prepare any special function for realizing conflict resolution.

Thus, according to the first embodiment of the present invention, it becomes possible to realize instantaneous swapping between applications each desiring to access a resource (which would be a requirement in any real-time system) by managing the priority levels assigned to the respective applications. Note that such is possible without requiring the application programmer to pay particular attention to the prevention of resource conflicts during programming. Since the resource section 16 can be produced according to generic standards, the resource section 16 is highly reusable.

Although the present embodiment assumes that the execution section 17 is an application, the execution section 17 is not limited to applications. The execution section 17 may simply be a piece of middleware which undertakes a request from an application, or any other type of software such as a driver.

Although the present embodiment illustrates an example where the exploiting-software priority management section 14 and the requesting-software priority acquisition section 15 acquire priority levels of applications from a priority management table as shown in FIG. 3, which simply dictates what priority level is assigned to which application, the present invention is not limited thereto. For example, a priority management table as shown in FIG. 4 may be used, which dictates a priority level for each combination of an application type and a resource type.

Furthermore, the number of resources which a given application is using and/or the amount of time a given application has been using a resource may be measured, and the priority levels of applications may be determined based on such information. For example, the priority level may be dynamically adjusted so that lower levels of priority are assigned to applications which are using more resources or applications which have been using a resource longer. By doing so, it becomes possible to prevent certain applications from occupying a given resource for a long time or a large number of resources at the same time.

Although a loudspeaker has been illustrated as an example of a resource, the resource is not limited to a loudspeaker, but may be an LED or a display device, for example. Furthermore, the resource does not even need to be a physical device, but may be a conceptual resource such as a connection for communication.

The present embodiment illustrates an example where, if application A and application B are equal in priority, step S5 in FIG. 2 makes a "NO" determination so that an error is notified to application B. In a variant, step S5 in FIG. 2 may make a "YES" determination if application A and application B are equal in priority, and the process performed by application A may accordingly be canceled.

Moreover, if a resource which has been used by application A is surrendered to application B, the resource access section 11 may memorize this fact, and when application B later releases the resource, the resource access section 11 may enable the processing of application A with respect to this resource. Furthermore, if a resource which has been used by application A is surrendered to application B and the same resource is further surrendered to application C, for example, one of the applications which were obliged to surrender the resources(i.e. , applications A and B in this example) that has the highest priority may be selected when application C later releases the resource, and the processing of the selected application may be enabled with respect to the now-released resource. At this time, the resurrection of the process may be notified to the selected application.

### (second embodiment)

Next, a second embodiment of the present invention will be described. The present embodiment is characterized in that, when an application which was once obliged to surrender a resource again requests access to the same resource, the resource access section notifies to the application that the resource has in fact been surrendered to another application. This feature enables the former application to perform necessary processing based on the received notification.

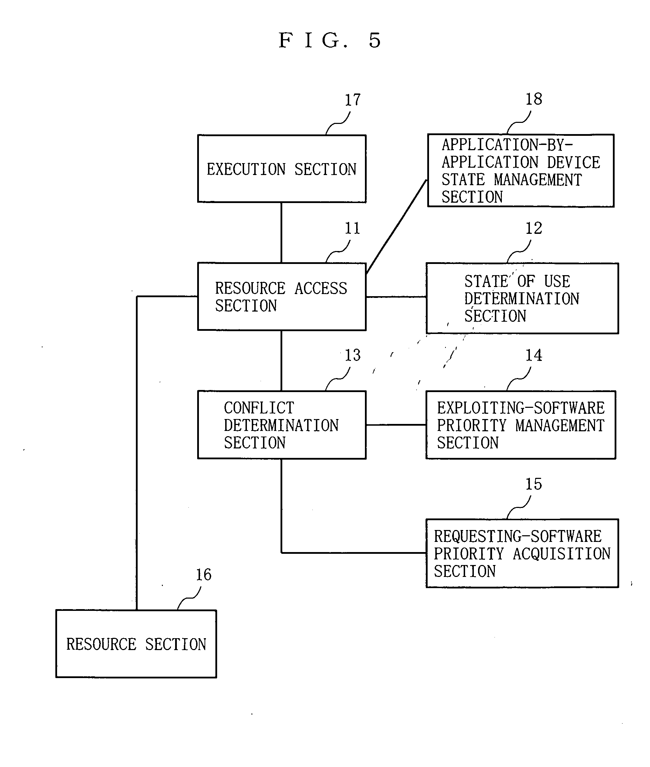

FIG. 5 is a block diagram illustrating the structure of an information processing terminal according to the second embodiment. In FIG. 5, elements which also appear in FIG. 1 are denoted by the same reference numerals as those used therein, and the descriptions thereof are omitted.

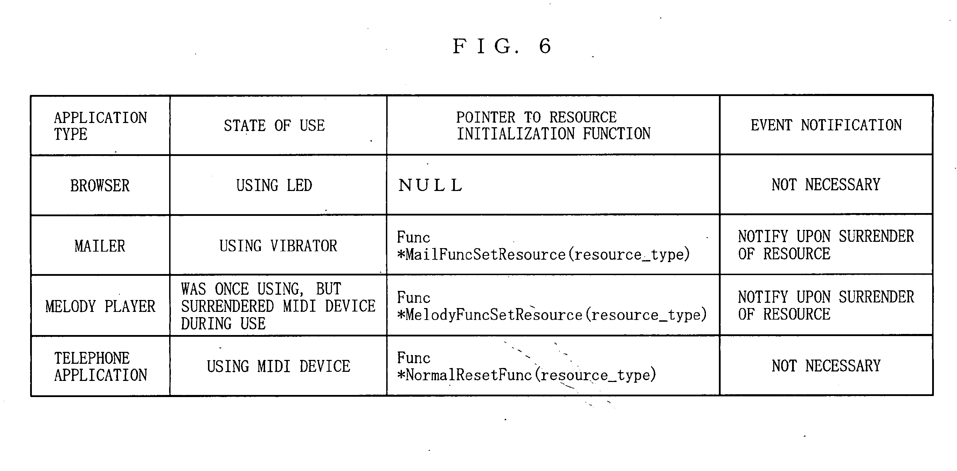

Based on a table as shown in FIG. 6, for example, an application-by-application device state management section 18 manages the state of use of a device (or more generically, a resource) with respect to each application (or more generically, software). In FIG. 6, the "state of use" field stores the state of use of a device with respect to each application. For example, in the example illustrated in FIG. 5, it can be seen that a MIDI device which was being used by a melody player has been surrendered to a telephone application which is now using the MIDI device. In the "pointer to resource initialization function" field, a resource initialization function is designated, which can be defined with respect to each resource type used by the application. It would also be possible to designate a default initialization function. In the case where no resource initialization function is necessary, this field should contain a NULL value. The "event notification" field designates whether or not to notify the application when it has just been obliged to surrender a resource, or when access to a resource has been regained to itself.

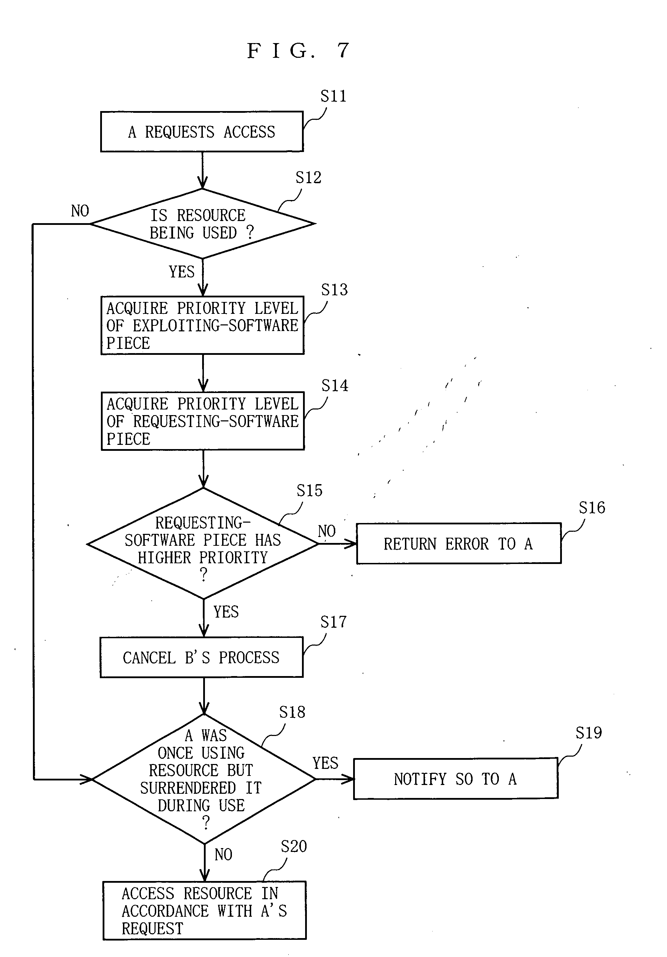

Next, the processing according to the second embodiment will be described with reference to the sequence chart of FIG. 7. The following description illustrates a case where an application (application A) which has once accessed a resource later accesses the same resource.

First, application A makes a request for accessing a resource to the resource access section 11 (step S11).

The processes from steps S12 to S17 are the same as the processes of steps S2 to S7 in FIG. 2 (assuming that the "requesting-software piece" is application A and that the "exploiting-software piece" is application B). Therefore, the description of these processes are omitted.

At step S12 , if the resource which application A desires to access is not being used, control proceeds to step S18. Note that step S18 will also be reached next to step S17.

At step S18, the resource access section 11 determines whether the requesting-software piece (i.e., application A) was once using the resource but surrendered the resource to another application during its use. This determination is made in light of the "state of use" field (FIG. 6) of application A as managed by the application-by-application device state management section 18. If step S 18 finds that application A was once using the resource but surrendered the resource to another application, the resource access section 11 notifies this fact to application A (step S19). Otherwise, the resource access section 11 accesses the resource based on the accessing request from application A (step S20).

Receiving the above notification from the resource access section 11 at step S19, application A performs an initialization process or the like for the resource because the fact that "the resource which was once used by application A has been surrendered to another application" means that the settings of the resource may have been changed from how they were when the resource was being used by application A.

Thus, according to the present embodiment, if a given application surrenders a resource to another application during its use, such a fact is retained in the application-by-application device state management section 18, and is notified back to the surrendering application when it again accesses the same resource. Based on this notification, the application knows that the current state of the resource may be different from how it was when the resource was being used by itself, and can perform an initialization process or the like for the resource as necessary.

### (third embodiment)

In the second embodiment described above, application itself performs an initialization process or the like for a resource as necessary when a notification from the resource access section is received. A third embodiment of the present invention is characterized in that the resource access section performs such an initialization process in the place of the relevant application. Since the information processing terminal according to the third embodiment is identical to that of the second embodiment except for the aforementioned aspect of the operation performed by the resource access section, the present embodiment will be described also with reference to FIG. 5.

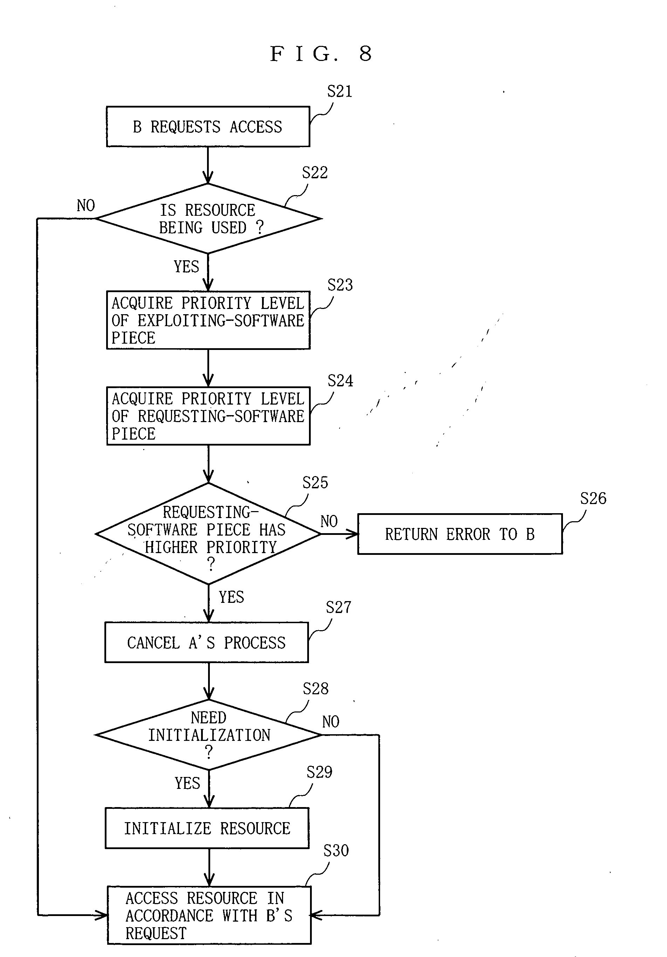

Hereinafter, with reference to a sequence chart shown in FIG. 8, a flow of process will be described which involves making a determination as to whether initialization is necessary for each resource and in which the resource access section performs an initialization process if necessary. The processes from steps S21 to S27 in FIG. 8 are the same as the processes of steps S1 to S7 in FIG. 2, and therefore, the description of these processes are omitted.

At step S28, the resource access section 11 determines whether the resource needs to be reset (i.e., initialized) before making an access to the resource as requested by application B (step S28). If initialization is not necessary, the resource access section 11 accesses the resource. On the other hand, if initialization is necessary, the resource access section 11 accesses the resource only after initializing the resource at step S29 (step S30). Note that the resource access section 11 can make the determination as to whether or not initialization is necessary based on the "pointer to resource initialization function" field in the table as shown in FIG. 6, which is managed by the application-by-application device state management section 18. Note that each application which wants the resource access section 11 to perform an initialization process on its behalf when regaining access to the resource should previously register such a desire in the "pointer to resource initialization function" field of the application-by-application device state management section 18 via the resource access section 11. If this field contains a NULL value, the resource access section 11 determines that the resource does not need to be initialized.

Thus, according to the present embodiments, the resource access section can initialize the resource as necessary upon receiving an accessing request from an application. Thus, it is unnecessary for each application to pay attention to the necessity of initialization.

Although the present embodiment illustrates an example where the determination of the need to initialize is made with respect to each resource, it may alternatively be made with respect to each combination of a resource and an application. In the case where it is certain that resetting would never be problem, e.g., in the case of a very simple system, resetting may be performed unconditionally.

Furthermore, the information processing terminal may be arranged so that, if a given application, e.g.,. application A, surrenders a resource to another application during its use, the resource access section 11 registers the state of the resource when it was being used by application A to the application-by-application device state management section 18. This enables the resource access section 11 to restore the original state of the resource when application A again accesses the same resource. As a result, it is possible for application A to access the resource in its original state, without having to reset the resource, even if application A had to surrender the resource to another application. For example, if application A surrenders a loudspeaker to application B while using the loudspeaker at a sound volume level of "3", and application B sets the loudspeaker at a sound volume level of "5", the resource access section 11 will be able to automatically place the resource back to the original state (i.e., a sound volume level (of "3") when application A uses the loudspeaker. Thus, application A can continue to use the resource without being mindful of the previous surrendering of the resource.

### (fourth embodiment)

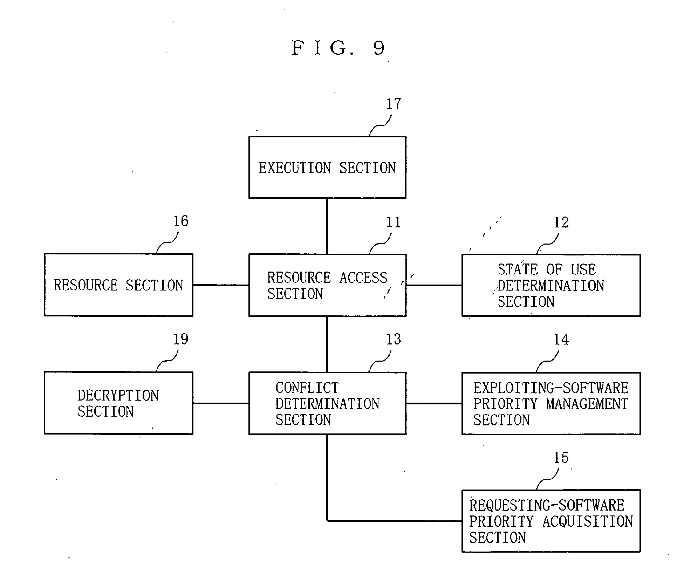

FIG. 9 is a block diagram illustrating the structure of an information processing terminal according to a fourth embodiment of the present invention. In FIG. 9, elements which also appear in FIG. 1 are denoted by the same reference numerals as those used therein, and the descriptions thereof are omitted. The present embodiment differs from the first embodiment in that the priority level of each application is embedded in the application itself in an encrypted form.

A decryption section 19 has the function of decrypting the encrypted priority information which is embedded in each application.

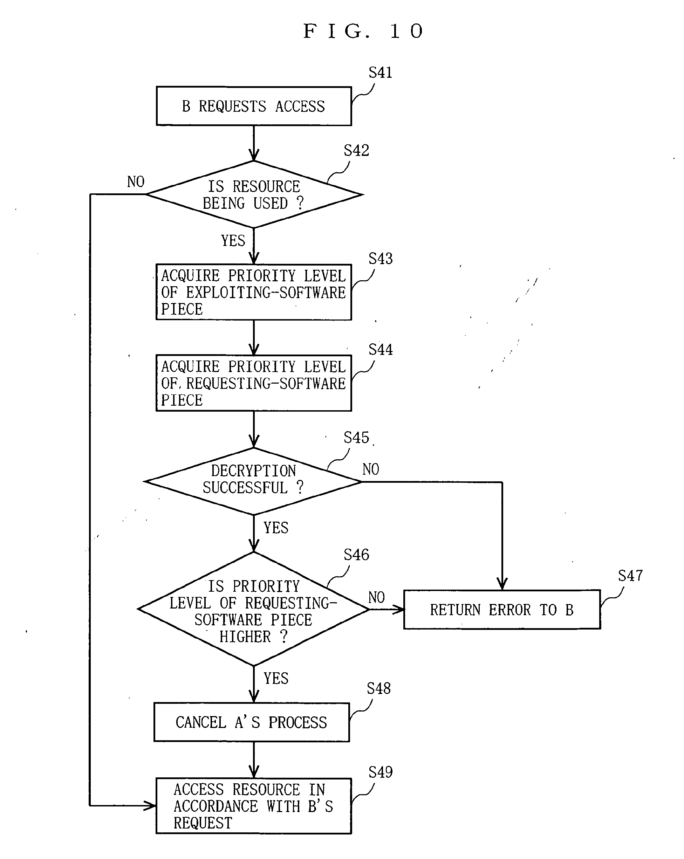

Hereinafter, the operation according to the fourth embodiment will be described with reference to a sequence chart of FIG. 10. In FIG. 10, the processes from steps S41 to S44 are identical to the processes from steps S1 to S4 in FIG. 2 except that the priority information of the requesting-software piece acquired by the requesting-software priority acquisition section 15 at step S44 is encrypted.

At step S45, the decryption section 19 decrypts the encrypted priority which the requesting-software priority acquisition section 15 has acquired from application B. If the decryption fails, the decryption section 19 regards application B as untrustable, and returns an error to application B, instead of granting its accessing request (step S47). If the decryption succeeds, control proceeds to step S46. The processes from step S46 and subsequent steps are identical to the processes of step S5 and subsequent steps in FIG. 2.

By thus improving the reliability of priority information, it becomes possible to prevent any non-abiding application from pretending to be another, higher-priority application, or trying to arbitrarily control its own priority level.

### (fifth embodiment)

Next, an information processing terminal according to a fifth embodiment of the present invention will be described. The present embodiment differs from the first embodiment in that the priority level of an application is varied depending on each library or module that is incorporated in the application. Since there are no other structural or operational differences from the first embodiment, the present embodiment will be described with reference to FIG. 1.

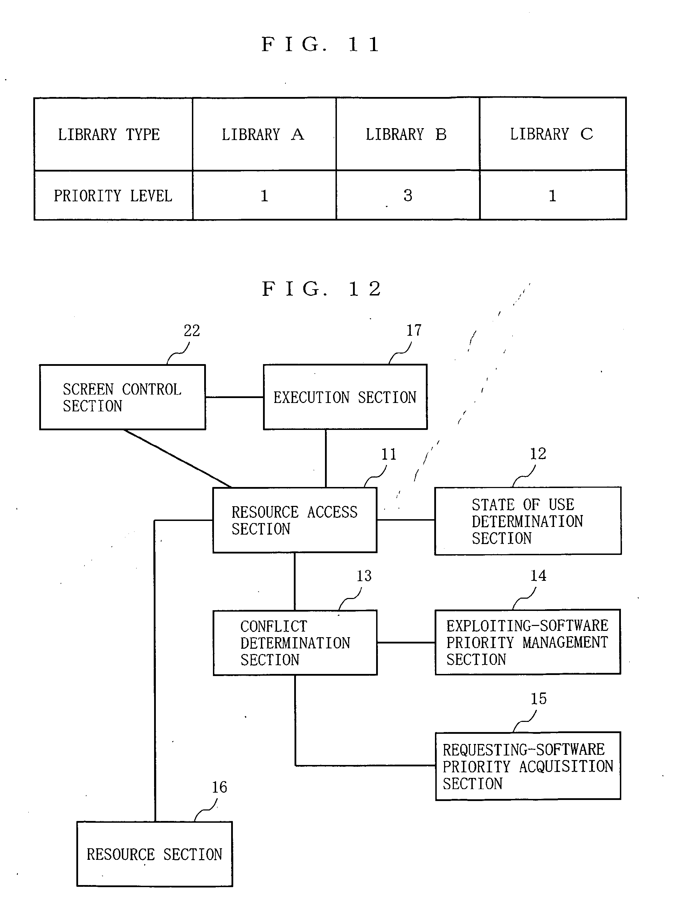

In the first embodiment, as illustrated in FIG. 3, the conflict determination section 13 determines the priority level based on the application type. In the present embodiment, however, as shown in FIG. 11, the conflict determination section 13 determines the priority level based on the type of library or module. In the case where it is desirous to alter the priority level even within a single library, threads with different priority levels may be created for each process. Alternatively, the priority level may be determined based on an attribute value such as an administrator's ID for the library.

By writing a priority level to the exploiting-software priority management section 14 each time an application accesses the resource, it becomes possible to transact the process while varying the priority level for each module composing the application.

The priority comparison may be conducted between modules having the highest (or lowest) priority levels in the compared applications. The priority level may be varied depending on the particular library under execution.

Thus, dynamically changing the priority level makes it possible, e.g., in the case where each application desires a higher or lower priority depending on the process it is performing, to conduct a priority comparison based on the most appropriate priority level in each application. For example, a telephone application may desire a higher priority for processing a telephone call in progress, while only requiring a lower priority for displaying a telephone menu.

Moreover, if a given application utilizes a library which has been created by an untrustable software house, the reliability of the entire application would decrease. In such a case, it would be proper to lower the priority level of the entire application in accordance with the low priority of that particular library.

### (sixth embodiment)

Next, an information processing terminal according to a sixth embodiment of the present invention will be described. FIG. 12 illustrates the structure of the information processing terminal according to the present embodiment. In FIG. 12, elements which also appear in FIG. 1 are denoted by the same reference numerals as those used therein, and the descriptions thereof are omitted. In the present embodiment, the resource access section 11 determines priority based on the overlying relationship between two layers displayed on the information processing terminal, such information being obtained from the screen control section 22. Each time the overlying relationship changes, the resource access section 11 receives a notification from the screen control section 22, and treats the application whose image is displayed as a topmost layer in the displayed image as the highest-priority application.

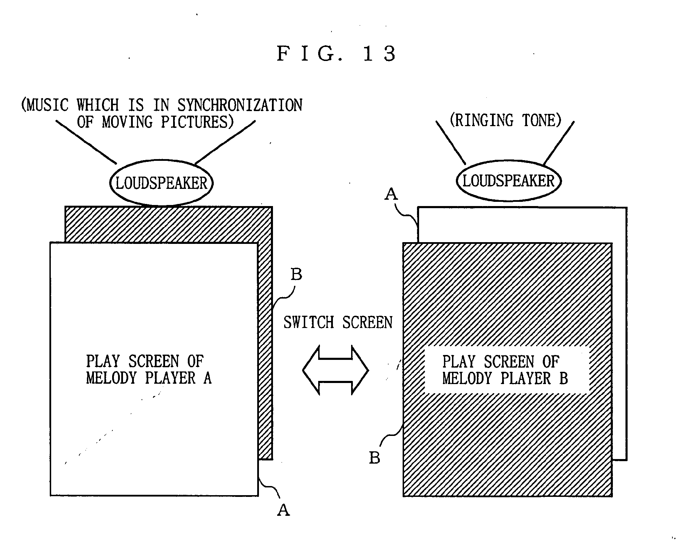

For example, when the user arbitrarily switches between an image which is displayed while playing a melody (hereinafter such an image will be referred to as a "play screen") of melody player A and a play screen of melody player B, a notification is given from the screen control section 22 to the resource access section 11 each time the screen is switched. Based on such notifications, the resource access section 11 will treat the melody player whose play screen is currently displayed as a topmost layer as having a higher priority than the other melody player. Thus, if the play screen of melody player A is being displayed as a topmost layer, the music which is reproduced by melody player A (i.e. , music which is in synchronization of moving pictures in the example shown in FIG. 13) is outputted from the loudspeaker. On the other hand, if the play screen of melody player B is being displayed as a topmost layer, the music which is reproduced by melody player B (i.e., a ringing tone or melody in the example shown in FIG. 13) is outputted from the loudspeaker.

In one variant, if an application which is displayed as a topmost layer is not requesting access to a resource, it may be ensured that any requested access to the resource is denied.

In the case where both the play screen of melody player A and the play screen of melody player B are simultaneously displayed on the information processing terminal (e.g., the play screen of melody player A being displayed in an upper portion of the screen and the play screen of melody player B being displayed in a lower portion of the screen), the sound generated by the melody player of the portion which has been selected via the user's key operation (either the upper or lower portion) may be allowed to be outputted via the loudspeaker.

Furthermore, the application which is being displayed as the second topmost layer may be granted access to the resource as soon as the application which is being displayed as the topmost layer ceases to issue a resource accessing request.

Alternatively, the information processing terminal may be arranged so that: the priority of applications is primarily determined based on an index other than the aforementioned overlying relationship (e.g., based on the table shown in FIG. 3); and only if such a determination indicates a number of applications to have equal priority, the aforementioned priority determination based on the overlying relationship is made.

If an application being displayed as a topmost layer once releases a resource, which is passed over to another application, and again requests access to the resource, the former application may be granted access to the resource at such time.

Thus, according to the sixth embodiment, even if there are two applications having the same level of priority (e.g., melody players), the application which is displayed as a foremost or topmost layer can be allowed to generate sounds with a higher priority. The other application, operating in the background, does not need to be conscious of the release of the resource, which is handled by the resource access section 11. Once the application operating in the foreground stops outputting sounds (i.e., releases the resource), the application in the background can now acquire access to the resource and resume outputting of sounds.

In any of the above embodiments, the application which has surrendered a resource may notify the surrender of the resource to the user, and optionally the reason why the surrender has occurred.

Alternatively, in any of the above embodiments, the application which has surrendered a resource may continue processing without notifying the surrender to the user, and notify to the user of completion of the processing as soon as it is completed.

While the invention has been described in detail, the foregoing description is in all aspects illustrative and not restrictive. It is understood that numerous other modifications and variations can be devised without departing from the scope of the invention.

## Claims

1. An information processing terminal comprising:
an execution section (17) containing a plurality of software pieces;
a resource section (16) including at least one resource to be accessed by at least one of the software pieces;
a resource access section (11) for mediating access by the software pieces in the execution section to the at least one resource by using a generic interface for accessing the resource section;
a state of use determination section (12) for determining whether the at least one resource is being currently used or not;
an exploiting-software priority management section (14) for managing a priority level of an exploiting-software piece, wherein the exploiting-software piece is a software piece currently using the at least one resource;
a requesting-software priority acquisition section (15) for acquiring a priority level of a requesting-software piece, wherein the requesting-software piece is a software piece which is making a request to access the at least one resource; and
a conflict determination section (13) for comparing the priority level acquired from the exploiting-software priority management section and the priority level acquired from the requesting-software priority acquisition section, and determining which one of the exploiting-software piece and the requesting-software piece should be granted access to the at least one resource,
wherein, based on the result of the determination by the state of use determination section and the result of the determination by the conflict determination section, the resource access section is operable to:
(A) if the at least one resource is not being currently used, or if the priority level of the requesting-software piece is higher than the priority level of the exploiting-software piece, access the at least one resource in accordance with the request of the requesting-software piece, and notify an error to the exploiting-software piece, or
(B) if the priority level of the requesting-software piece is lower than the priority level of the exploiting-software piece, notify an error to the requesting-software piece.

2. The information processing terminal according to claim 1, further comprising a software-by-software resource state management section (18) for managing a state of use of the at least one resource with respect to each software piece,
wherein, when receiving a request to access the at least one resource from the execution section,
the resource access section refers to the software-by-software resource state management section to determine whether the request to access is from a software piece which surrendered the at least one resource during a previous use of the at least one resource, and if so determined, notifies to the software piece that the software piece surrendered the at least one resource during its previous use.

3. The information processing terminal according to claim 1, wherein, if the at least one resource is surrendered from a software piece having a lower priority to a software piece having a higher priority, the resource access section notifies to the surrendering software piece that the resource has been surrendered, and when the resource is later released and the software piece having the lower priority regains access to the resource, the resource access section notifies to the software piece that the resource has been surrendered to another software piece.

4. The information processing terminal according to claim 1, wherein, if the at least one resource is surrendered from a software piece having a lower priority to a software piece having a higher priority, the resource access section cancels any process which is currently being executed by the software piece having the lower priority and thereafter determines whether it is necessary to reset each of the at least one resource, and if any resource needs to be reset, the resource access section accesses the resource after resetting the resource.

5. The information processing terminal according to claim 4, wherein, if the at least one resource is surrendered from a software piece having a lower priority to a software piece having a higher priority, the resource access section cancels any process which is currently being executed by the software piece having the lower priority, and thereafter determines whether it is necessary to reset each of the at least one resource, and if any resource needs to be reset, the resource access section performs a predetermined reset process which is previously registered by the software piece and thereafter accesses the resource in accordance with a request from the software piece having the higher priority.

6. The information processing terminal according to claim 1, further comprising a software-by-software resource state management section (18) for managing a state of use of the at least one resource with respect to each software piece,
wherein the resource access section performs a reset process for the at least one resource on behalf of a software piece which has once surrendered the resource but regained access to the resource upon release of the resource, the reset process comprising reading from the software-by-software resource state management section the state of use of the resource which existed when the resource was surrendered and resetting the resource to that state, and thereafter accesses the resource in accordance with a request from the software piece.

7. The information processing terminal according to claim 1, further comprising a decryption section (19) for decrypting priority levels which are obtained from software pieces in an encrypted form,
wherein the determination made by the conflict determination section is based on a result of the decryption by the decryption section.

8. The information processing terminal according to claim 1, wherein the determination made by the conflict determination section is based not only on the priority level assigned to each software piece but also on a priority level which is assigned to each of modules loaded or linked by the software piece.

9. The information processing terminal according to claim 1 further comprising a screen control section (22) for controlling an overlying relationship on a displayed image,
wherein the conflict determination section acquires information concerning an order of image layers of software pieces from the screen control section, and based on the acquired information, determines the priority levels of the software pieces for accessing the at least one resource.

10. The information processing terminal according to claim 9, wherein, if requests to access the at least one resource are received from a plurality of software pieces having the same priority level, the conflict determination section acquires information concerning an order of image layers of the software pieces from the screen control section, and based on the acquired information, permits the software piece whose image is displayed as a topmost layer to access the resource with priority.

11. An information processing method comprising:
a resource accessing step of mediating access by software pieces to at least one resource included in a resource section (16) by using a generic interface for accessing the resource section;
a state of use determination step of determining whether the at least one resource is being currently used or not;
an exploiting-software priority management step of managing a priority level of an exploiting-software piece, wherein the exploiting-software piece is a software piece currently using the at least one resource;
a requesting-software priority acquisition step of acquiring a priority level of a requesting-software piece, wherein the requesting-software piece is a software piece which is making a request to access the at least one resource; and
a conflict determination step of comparing the priority level as managed in the exploiting-software priority management step and the priority level as acquired in the requesting-software priority acquisition step, and determining which one of the exploiting-software piece and the requesting-software piece should be granted access to the at least one resource,
wherein, based on the result of the determination of the state of use determination step and the result of the determination of the conflict determination step, the resource accessing step comprises:
(A) if the at least one resource is not being currently used, or if the priority level of the requesting-software piece is higher than the priority level of the exploiting-software piece, accessing the at least one resource in accordance with the request of the requesting-software piece, and notifying an error to the exploiting-software piece, or
(B) if the priority level of the requesting-software piece is lower than the priority level of the exploiting-software piece, notifying an error to the requesting-software piece.

12. The information processing method according to claim 11, further comprising a software-by-software resource state management step of managing a state of use of the at least one resource with respect to each software piece,
wherein the resource access step comprises:
performing a reset process for the at least one resource on behalf of a software piece which has once surrendered the resource but regained access to the resource upon release of the resource, the reset process comprising reading the state of use of the resource, as managed in the software-by-software resource state management step, which existed when the resource was surrendered, and resetting the resource to that state; and
thereafter accessing the resource in accordance with a request from the software piece.

13. The information processing method according to claim 11, wherein the conflict determination step comprises:
acquiring information concerning an order of image layers of software pieces from a screen control section (22) for controlling an overlying relationship on a displayed image; and
based on the acquired information, determining the priority levels of the software pieces for accessing the at least one resource.

14. The information processing method according to claim 13, wherein the conflict determination step comprises, if requests to access the at least one resource are received from a plurality of software pieces having the same priority level:
acquiring information concerning an order of image layers of the software pieces from the screen control section; and
based on the acquired information, permitting the software piece whose image is displayed as a topmost layer to access the resource with priority.
